# EUROPEAN PATENT APPLICATION

(11) **EP 2 819 469 A1**
(43) Date of publication of application: **31.12.2014**
(21) Application number: 13751636.5
(22) Date of filing: 21.02.2013
(51) Int. Cl.: H04W 60/04, H04W 60/06, H04W 76/02

(54) **MOBILE STATION AND COMMUNICATION METHOD**

(30) Priority: 24.02.2012 JP 2012038491
(71) Applicant: NTT DOCOMO, INC., Chiyoda-ku Tokyo 100-6150 (JP)
(72) Inventor: TANAKA, Itsuma, Tokyo 100-6150 (JP); TOKUNAGA, Kazuhito, Tokyo 100-6150 (JP); OBATA, Hiroshi, Tokyo 100-6150 (JP)
(74) Representative: Hoffmann Eitle
(86) International application number: PCT/JP2013/054263
(87) International publication number: WO 2013/125615

(57) **Abstract**

A mobile station and a communication method are provided, which are capable of preventing a state where no incoming calls can be received from continuing for a long time even if an IP-CAN Bearer, which is a logical communication path used for SIP and audio media, is removed for some reason. UE 100 is connectable to an access network complying with the Internet protocol and executes registration with an IP multimedia subsystem complying with the Internet protocol. The UE 100 includes: a bearer establishment unit 110 configured to establish an IP-CAN Bearer that is a logical communication path between the UE 100 and a PGW constituting the access network; and a registration processing unit 120 configured to execute registration of the mobile station with the IP multimedia subsystem when the bearer establishment unit 110 establishes the IP-CAN Bearer.

## Description

### TECHNICAL FIELD

The present invention relates to a mobile station capable of connecting to an access network complying with the Internet protocol, and to a communication method thereof.

### BACKGROUND ART

In Long Term Evolution (LTE), a mechanism to enable a mobile station (UE) to perform LTE voice calls (VoLTE) is specified. In this mechanism, on an IP-Connectivity Access Network (IP-CAN) that is an access network providing a transport function for Session Initiation Protocol (SIP) and audio media, the mobile station (UE) establishes an IP-CAN Bearer (SIP bearer) which is a logical communication path for SIP and audio media (see Non-Patent Document 1, for example).

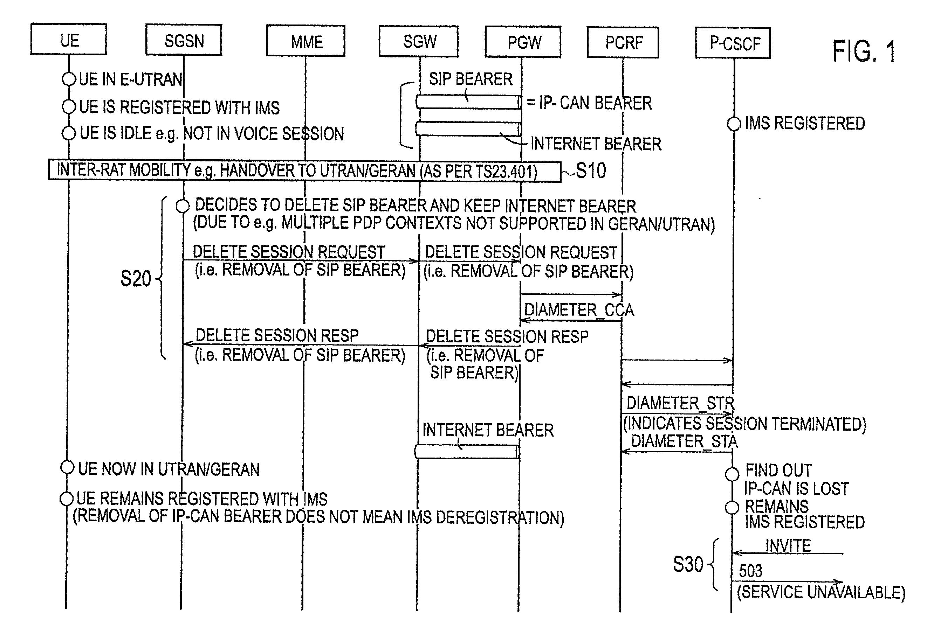

Fig. 1 shows a communication sequence in which the IP-CAN Bearer is removed because of handover to UTRAN/GERAN after the mobile station establishes the IP-CAN Bearer. As shown in Fig. 1, when the mobile station executes handover to UTRAN/GERAN (S10), the IP-CAN Bearer is removed (removal) (S20).

### PRIOR ART DOCUMENT

### NON-PATENT DOCUMENT

Non-patent document 1: 3GPP TS 24.229 V11.2.1, 3rd Generation Partnership Project; Technical Specification Group Core Network and Terminals; IP multimedia call control protocol based on Session Initiation Protocol (SIP) and Session Description Protocol (SDP); Stage 3 (Release 11), January 2012

### SUMMARY OF THE INVENTION

However, the conventional IP-CAN Bearer removal procedures described above have the following problem. Specifically, as shown in Fig. 1, after the mobile station executes Registration with an IP Multimedia core network Subsystem (IMS) formed by a Policy and Charging Rules Function (PCRF), a Primary-Call Session Control Function (P-CSCF) and the like, the IP-CAN Bearer is removed when the mobile station performs handover to UTRAN/GERAN or the like. In this case, the mobile station remains registered in the IMS (more specifically, the P-CSCF), but is kept having no IP-CAN Bearer. This leads to a problem that, when there is an incoming call to the mobile station from IP-CAN Bearer on another network, the P-CSCF transmits an error response (Service Unavailable) to the other network since the IP-CAN Bearer for the mobile station is removed (S30 in Fig. 1).

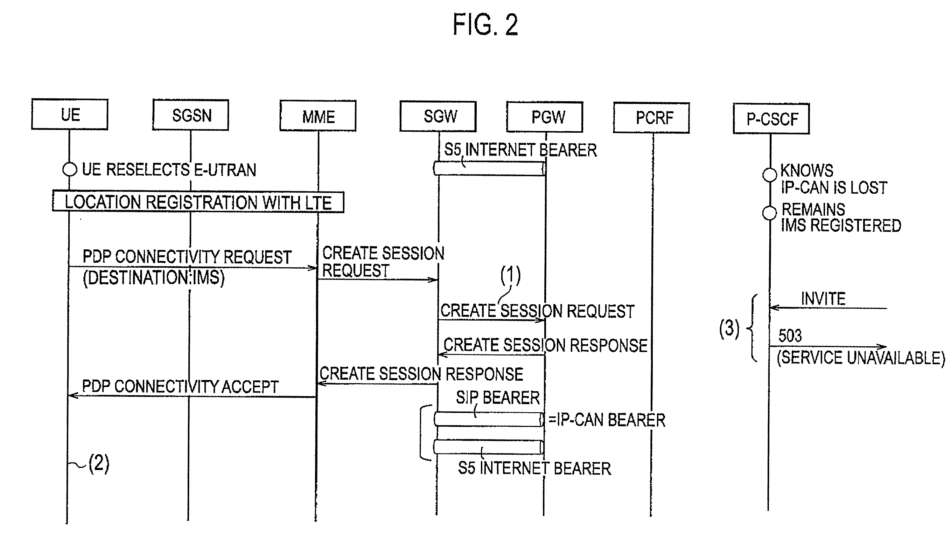

Here, Fig. 2 shows an example of a situation where the mobile station remains registered in the IMS even after the IP-CAN Bearer is removed. To be more specific, Fig. 2 shows a communication sequence in the case where the mobile station returns to LTE after executing handover to UTRAN/GERAN. As shown in Fig. 2, when the mobile station returns to LTE, a request to establish a session (Create Session Request) is transmitted to a Packet Data Network Gateway (PGW) ((1) in Fig. 2). However, the PGW cannot notify the P-CSCF that the IP-CAN Bearer is re-established and restored.

Meanwhile, even if the IP-CAN Bearer is re-established, a layer (Non-Access-Stratum layer) to execute the establishment of the IP-CAN Bearer and a layer (IMS application layer) to execute Registration with the IMS are different, and the mobile station does not execute Registration with the IMS upon re-establishment of the IP-CAN Bearer ((2) in Fig. 2). This leads to a problem that the P-CSCF continues to transmit the error response (Service Unavailable) to another network even though the mobile station is enabled to communicate through the IMS ((3) in Fig. 2). More specifically, the problem is that the mobile station is disabled to receive incoming calls for a long time because the re-establishment of the IP-CAN Bearer by the mobile station does not trigger the Registration with the IMS.

The present invention has been made in view of the above-mentioned problem. An objective of the present invention is to provide a mobile station and a communication method capable of preventing a state where no incoming calls can be received from continuing for a long time even if an IP-CAN Bearer, which is a logical communication path used for SIP and audio media, is removed for some reason.

A first feature of the present invention is summarized as a mobile station capable of connecting to an access network complying with Internet protocol, and configured to execute registration with an IP multimedia subsystem complying with the Internet protocol, including: a bearer establishment unit configured to establish a bearer that is a logical communication path between the mobile station and a gateway device included in the access network; and a registration processing unit configured to execute registration of the mobile station with the IP multimedia subsystem when the bearer establishment unit establishes the bearer.

A second feature of the present invention is summarized as a communication method for a communication device capable of connecting to an access network complying with Internet protocol and configured to execute registration with an IP multimedia subsystem complying with the Internet protocol, including: establishing a bearer that is a logical communication path between the communication device and a gateway device included in the access network; and executing registration of the communication device with the IP multimedia subsystem when establishing the bearer.

### BRIEF DESCRIPTION OF THE DRAWINGS

[Fig. 1] Fig. 1 is a diagram showing a communication sequence when an IP-CAN Bearer is removed in a conventional mobile communication system.
[Fig. 2] Fig. 2 is a diagram showing an example of a situation where a mobile station remains registered in an IMS even after the IP-CAN Bearer is removed in the conventional mobile communication system.
[Fig. 3] Fig. 3 is an overall schematic configuration diagram of a mobile communication system according to an embodiment of the present invention.
[Fig. 4] Fig. 4 is a functional block configuration diagram of a mobile station according to the embodiment of the present invention.
[Fig. 5] Fig. 5 is a flowchart (Part 1) showing operations of the mobile station according to the embodiment of the present invention.
[Fig. 6] Fig. 6 is a flowchart (Part 2) showing operations of the mobile station according to the embodiment of the present invention.

### MODE FOR CARRYING OUT THE INVENTION

Hereinafter, embodiments of the present invention will be described. Note that, in the following description of the drawings, same or similar reference numerals denote same or similar elements and portions. In addition, it should be noted that the drawings are schematic and ratios of dimensions and the like in the drawings are different from actual ones.

Therefore, specific dimensions and the like should be determined in consideration of the following description. Moreover, as a matter of course, the drawings include portions having different dimensional relationships and ratios from each other.

### (1) Overall Schematic Configuration of Mobile Communication System

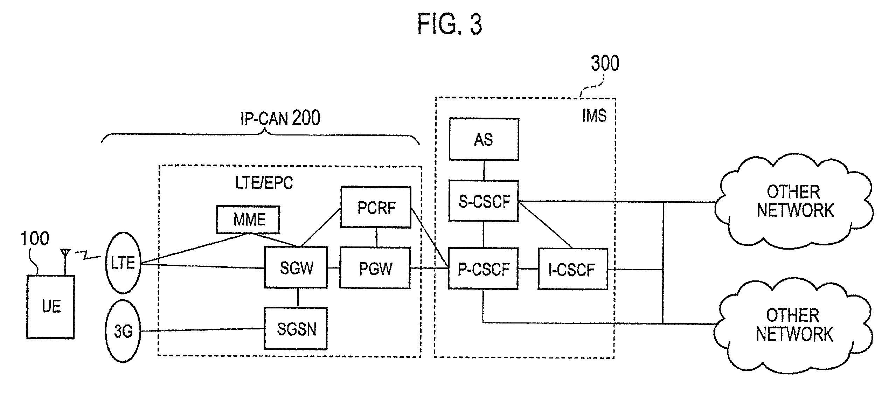

Fig. 3 is an overall schematic configuration diagram of a mobile communication system 10 according to this embodiment. As shown in Fig. 3, the mobile communication system 10 includes a mobile station 100 (hereinafter referred to as the UE 100), an IP-Connectivity Access Network 200 (hereinafter referred to as the IP-CAN 200) and an IP Multimedia core network Subsystem 300 (hereinafter referred to as the IMS 300).

In this embodiment, the UE 100 can execute radio communication complying with Long Term Evolution (LTE) and 3G (W-CDMA). The UE 100 can connect to the IP-CAN 200 in accordance with LTE or 3G. The UE 100 also executes Registration of the UE 100 with the IMS 300 through the IP-CAN 200. For example, the UE 100 can execute the registration of the UE 100 with the IMS 300 according to Registration procedures specified in Section 5.1.1.1 and Section L3.1.2 of 3GPP TS 24.229.

The IP-CAN 200 is an access network complying with the Internet protocol (IP). To be more specific, the IP-CAN 200 is a network providing a transport function for Session Initiation Protocol (SIP) and audio media, and is equivalent to an LTE/Evolved Packet Core (EPC) network in this embodiment.

The IP-CAN 200 includes a Mobility Management Entity (MME), a Serving Gateway (SGW), a Packet Data Network Gateway (PGW), a Policy and Charging Rules Function (PCRF) and an SGSN (Serving GPRS Support Node).

The MME is an exchange configured to accommodate an eNodeB (radio base station) and provide a mobility control or bearer control function and the like. The SGW is a packet exchange located within a zone and configured to accommodate a 3GPP (LTE) access system. The PGW is a connection point with an IMS base and is a packet exchange configured to perform IP address assignment, packet transfer to the SGW, and the like. The PGW also executes QoS control, bearer setting control and the like in cooperation with the PCRF. The PCRF is a logical node configured to execute control for QoS and charging of user data transfer. The SGSN is a packet exchange configured to accommodate a UTRAN (3G) access system.

The IMS 300 is a multimedia subsystem complying with the Internet protocol, and includes a Primary-Call Session Control Function (P-CSCF), an Interrogating-Call Session Control Function (I-CSCF), a Serving-Call Session Control Function (S-CSCF) and an Application Server (AS).

The P-CSCF is an SIP relay server disposed at a connection point with the EPC, and has functions not only to transfer the SIP but also to start the QoS control and recognize the state of the IP-CAN Bearer in cooperation with the EPC (PCRF). Also, another network (fixed-line telecommunications network or the like) is connected to the IMS 300.

### (2) Functional Block Configuration of Mobile Station

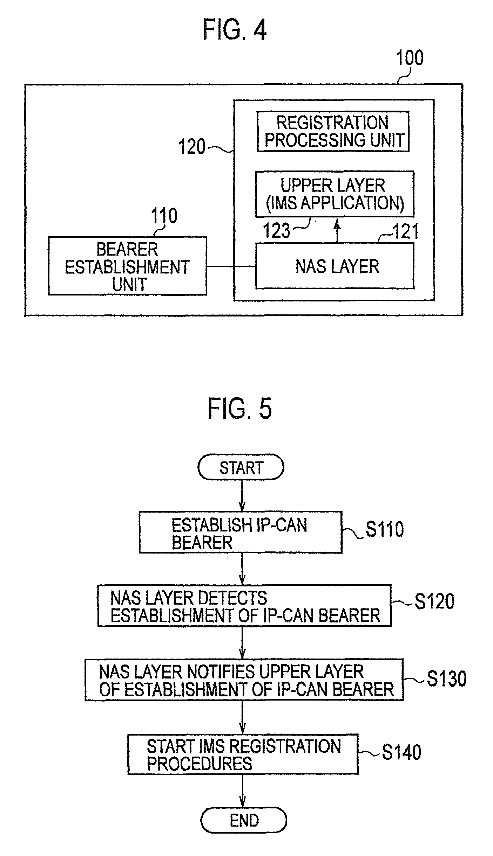

Fig. 4 is a functional block configuration diagram of the UE 100. As shown in Fig. 4, the UE 100 includes a bearer establishment unit 110 and a registration processing unit 120. As described above, the UE 100 can connect to the IP-CAN 200, and executes registration with the IMS 300. In this embodiment, particularly, the UE 100 operates as a terminal (communication device) configured to process voice calls (VoLTE) in LTE.

The bearer establishment unit 110 establishes an IP-CAN Bearer that is a logical communication path between the UE 100 and the PGW included in the IP-CAN 200. To be more specific, the IP-CAN Bearer is a communication path (bearer) for transferring the SIP and audio media set in the IP-CAN 200.

When the bearer establishment unit 110 establishes the IP-CAN Bearer, the registration processing unit 120 executes registration of the UE 100 with the IMS 300. To be more specific, the registration processing unit 120 includes a Non-Access-Stratum layer 121 (hereinafter referred to as the NAS layer 121) and an upper layer 123 located above the NAS layer 121.

The NAS layer 121 detects the establishment of the IP-CAN Bearer by the bearer establishment unit 110, and notifies the upper layer 123 of the establishment of the IP-CAN Bearer.

The upper layer 123 executes Registration of the UE 100 with the IMS 300 based on, notification of establishment of the IP-CAN Bearer received from the NAS layer 121. The upper layer 123 is, more specifically, an IMS application to always execute Registration of the UE 100 with the IMS 300 when the bearer establishment unit 110 establishes the IP-CAN Bearer.

Note that the timing of Registration may be within a predetermined time after the IP-CAN Bearer is established or may be before the IP-CAN Bearer is actually established if notification that the bearer establishment unit 110 determines to establish the IP-CAN Bearer is received.

### (3) Operations of Mobile Station

Next, description is given of operations of the UE 100 executing Registration with the IMS 300. Fig. 5 shows an operation flow of Registration by the UE 100.

As shown in Fig. 5, the UE 100 establishes an IP-CAN Bearer (S110). To be more specific, the bearer establishment unit 110 establishes the IP-CAN Bearer with the PGW under a predetermined condition (see the communication sequence shown in Fig. 2 described above for details). The predetermined condition is, for example, that the UE 100 returns to LTE after executing handover to the UTRAN (3G), that the UE 100 re-establishes the IP-CAN Bearer which has been disconnected by network failure or the like, and the like.

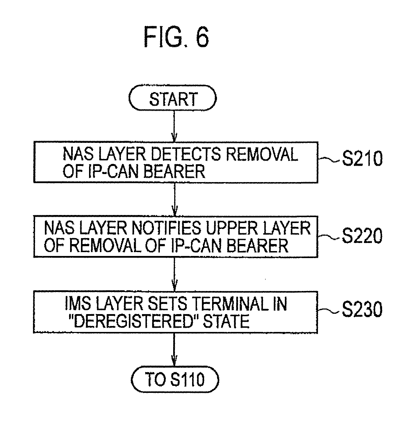

Furthermore, the operations of the UE 100 executing Registration with the IMS 300 may be configured as follows. Fig. 6 shows an operation flow of Registration by the UE 100.

As shown in Fig. 6, when detecting removal of the IP-CAN Bearer in S20 of Fig. 1 (S210) before executing the operation flow shown in Fig. 5, the UE 100 may be terminated from an IMS Registration state and turned into a Deregistered state. More specifically, when detecting the removal of the IP-CAN Bearer, the NAS layer 121 notifies the upper layer 123 (IMS application) of the removal of the IP-CAN Bearer (S220). Then, the upper layer 123 terminates the IMS Registration state of the UE 100 (terminal) and sets the UE 100 in the Deregistered state (S230).

As shown in Fig. 5, when the bearer establishment unit 110 establishes the IP-CAN Bearer, the NAS layer 121 detects the establishment of the IP-CAN Bearer, more specifically, completion of the IP-CAN Bearer establishment procedures (see Fig. 2) (S120).

When detecting the establishment of the IP-CAN Bearer, the NAS layer 121 notifies the upper layer 123 (IMS application) of the establishment of the IP-CAN Bearer (S130).

When receiving the notification of the establishment of the IP-CAN Bearer from the NAS layer 121, the upper layer 123 starts IMS Registration procedures (S140). When the upper layer 123 starts the IMS Registration procedures, Registration of the UE 100 with the IMS 300 is executed.

### (4) Advantageous Effects

According to the UE 100 described above, whenever the bearer establishment unit 110 establishes the IP-CAN Bearer, the registration processing unit 120 executes Registration of the UE 100 with the IMS 300. This makes it possible to solve the problem that, even if the IP-CAN Bearer is removed for some reason, the UE 100 remains registered with the IMS 300 and the IMS 300 (more specifically, the P-CSCF) continues to transmit an error response (Service Unavailable) to another network. To be more specific, this can avoid a state where after the IP-CAN Bearer is removed for some reason, the P-CSCF continues to transmit the error response (Service Unavailable) to another network even though the UE 100 re-establishes the IP-CAN Bearer and is enabled to communicate through the IMS 300.

In other words, it prevents a state where no incoming calls can be received continuing for a long time even if the IP-CAN Bearer is removed for some reason.

As described above, the details of the present invention have been disclosed by using the embodiment of the present invention. However, it should not be understood that the description and drawings which constitute part of this disclosure limit the present invention. From this disclosure, various alternative embodiments, examples, and operation techniques will be easily found by those skilled in the art.

Although the description is given of the UTRAN (3G) as an example in the above embodiment, for example, GERAN (2G) may be adopted instead of the UTRAN. Moreover, although the registration processing unit 120 includes the NAS layer 121 and the upper layer 123 in the above embodiment, such a configuration is not necessarily essential. For example, the NAS layer 121 may execute Registration of the UE 100 with the IMS 300.

The above-described present invention may also be expressed as follows. A first feature of the present invention is summarized as a UE 100 (mobile station) capable of connecting to an IP-CAN 200 (access network) complying with Internet protocol, and configured to execute registration with an IMS 300 (IP multimedia subsystem) complying with the Internet protocol, including: a bearer establishment unit 110 (bearer establishment unit) configured to establish an IP-CAN Bearer (bearer) that is a logical communication path between the mobile station and a PGW (gateway device) included in the access network; and a registration processing unit 120 (registration processing unit) configured to execute registration of the mobile station with the IP multimedia subsystem when the bearer establishment unit establishes the bearer.

In addition, in the first feature described above, the registration processing unit may include a NAS layer 121 (NAS layer) configured to detect establishment of the bearer by the bearer establishment unit, and an upper layer 123 (upper layer) configured to execute registration of the mobile station with the IP multimedia subsystem, based on notification of establishment of the bearer received from the NAS layer.

Moreover, in the first feature described above, the registration processing unit may include a NAS layer 121 (NAS layer) configured to detect removal of the bearer by the bearer establishment unit, and an upper layer 123 (upper layer) configured to terminate a registered state of the mobile station with the IP multimedia subsystem, based on notification of disconnection of the bearer received from the NAS layer.

A second feature of the present invention is summarized as a communication method for a UE 100 (communication device) capable of connecting to an access network complying with Internet protocol and configured to execute registration with an IP multimedia subsystem complying with the Internet protocol, including: establishing a bearer that is a logical communication path between the communication device and a gateway device included in the access network; and executing registration of the communication device with the IP multimedia subsystem when establishing the bearer.

As described above, the present invention naturally includes various embodiments which are not described herein. Accordingly, the technical scope of the present invention should be determined only by the matters to define the invention in the scope of claims regarded as appropriate based on the description.

Note that the entire content of Japanese Patent Application No. 2012-038491 (filed on February 24, 2012) is incorporated by reference in the present specification.

### INDUSTRIAL APPLICABILITY

According to the features of the present invention, a mobile station and a communication method can be provided, which can prevent a state where no incoming calls can be received from continuing for a long time even if an IP-CAN Bearer, which is a logical communication path used for SIP and audio media, is removed for some reason.

### EXPLANATION OF THE REFERENCE NUMERALS

- 10: mobile communication system
- 100: UE
- 110: bearer establishment unit
- 120: registration processing unit
- 121: NAS layer
- 123: upper layer
- 200: IP-CAN
- 300: IMS

## Claims

1. A mobile station capable of connecting to an access network complying with Internet protocol, and configured to execute registration with an IP multimedia subsystem complying with the Internet protocol, comprising:
a bearer establishment unit configured to establish a bearer that is a logical communication path between the mobile station and a gateway device included in the access network; and
a registration processing unit configured to execute registration of the mobile station with the IP multimedia subsystem when the bearer establishment unit establishes the bearer.

2. The mobile station according to claim 1, wherein
the registration processing unit includes
a NAS layer configured to detect establishment of the bearer by the bearer establishment unit, and
an upper layer configured to execute registration of the mobile station with the IP multimedia subsystem, based on notification of establishment of the bearer received from the NAS layer.

3. The mobile station according to claim 1, wherein
the registration processing unit includes
a NAS layer configured to detect removal of the bearer by the bearer establishment unit, and
an upper layer configured to terminate a registered state of the mobile station with the IP multimedia subsystem, based on notification of disconnection of the bearer received from the NAS layer.

4. A communication method for a communication device capable of connecting to an access network complying with Internet protocol and configured to execute registration with an IP multimedia subsystem complying with the Internet protocol, comprising:
establishing a bearer that is a logical communication path between the communication device and a gateway device included in the access network; and
executing registration of the communication device with the IP multimedia subsystem when establishing the bearer.
